# EUROPEAN PATENT APPLICATION

(11) **EP 4 635 962 A1**
(43) Date of publication of application: **22.10.2025**
(21) Application number: 25166467.8
(22) Date of filing: 26.03.2025
(51) Int. Cl.: C07F 7/18

(54) **CYCLIC AMINOORGANOXYSILANE COMPOUND AND METHOD FOR PRODUCING THE SAME**

(30) Priority: 15.04.2024 JP 2024065248
(71) Applicant: Shin-Etsu Chemical Co., Ltd., Chiyoda-ku, Tokyo 1000005 (JP)
(72) Inventor: TONOMURA, Yoichi, Joetsu-shi, 9428601 (JP)
(74) Representative: Mewburn Ellis LLP

(57) **Abstract**

A cyclic aminoorganoxysilane compound of general formula (1): 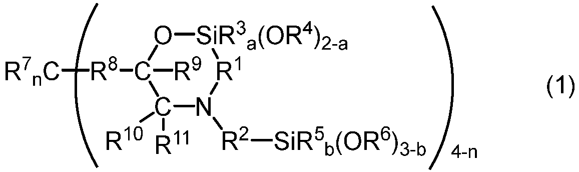 wherein R¹ and R² are each an unsubstituted divalent hydrocarbon group having 1 to 10 carbon atoms, R³ to R⁶ are each an unsubstituted monovalent hydrocarbon group having 1 to 20 carbon atoms, R⁷, R⁹, R¹⁰, and R¹¹ are each a hydrogen atom or an unsubstituted monovalent hydrocarbon group having 1 to 20 carbon atoms, R⁸ is an unsubstituted divalent hydrocarbon group having 1 to 10 carbon atoms and optionally interposed by an oxygen atom, and a, b, and n are each independently 0, 1, or 2.

## Description

### TECHNICAL FIELD

The present invention relates to a cyclic aminoorganoxysilane compound useful as a silane coupling agent, a surface treatment agent, a resin additive, a paint additive, an adhesive agent, and the like, and a method for producing the same.

### BACKGROUND

Silane compounds having an amino group are useful as a silane coupling agent, a surface treatment agent, a resin additive, a paint additive, an adhesive agent, and the like. As for the silane compounds having an amino group, for example, an organoxysilane compound having a primary amino group, such as aminopropyltrimethoxysilane, an organoxysilane compound having a secondary amino group, such as N-phenylaminopropyltrimethoxysilane, and an organoxysilane compound having a tertiary amino group, such as dimethylaminopropyltrimethoxysilane are known.

These silane compounds, however, have only one amino group and one organoxysilyl group per molecule. Therefore, when used as a silane coupling agent, a surface treatment agent, a resin additive, a paint additive, an adhesive agent, or the like, the silane compounds may exhibit little effect caused by introduction of a functional group.

In order to solve the above problem, Patent Documents 1 to 3 propose tertiary aminosilane compounds having an intramolecular organoxysilyl group. These compounds react with moisture to further produce a hydroxyl group in addition to the originally possessed amino group. Since the hydroxyl group has a large interaction with resins such as epoxy, urethane, and polycarbonate resins, the effect caused by introduction of a functional group is increased. In addition, since the intramolecular organoxy group moiety does not produce low-boiling alcohols such as methanol and ethanol when the tertiary aminosilane compound reacts with moisture, the tertiary aminosilane compound is also useful as a compound having a small environmental load.

### Citation List

Patent Document 1: JP-A 2010-120925
Patent Document 2: JP-A 2014-001152
Patent Document 3: JP-A 2019-218299

### SUMMARY OF THE INVENTION

Both the compounds of Patent Documents 1 and 2 have, as functional groups, one amino group, one hydroxyl group generated by the reaction with moisture, and one organoxysilyl group per molecule.

Meanwhile, in recent years, with diversification of use purposes of the silane compound in silane coupling agents, surface treatment agents, resin additives, paint additives, adhesive agents, and the like, silane compounds having a greater effect of addition have been desired. For this reason, it is conceivable to use a diamine compound such as ethylenediamine as the amine compound with reference to Patent Document 1. In this case, however, the target product is gelled, and it is difficult to use the target product for the above applications. In addition, it is also conceivable to use a polyepoxy compound as the epoxy compound with reference to Patent Document 2. In this case, however, a product obtained by the reaction of the epoxy compound with an aminosilane has an N-H group, so that the N-H group further reacts with the epoxy group and the product is gelled, and it is similarly difficult to use the product for the above applications.

Meanwhile, the compound of Patent Document 3 has, as functional groups, one amino group, one hydroxyl group generated by the reaction with moisture, and two organoxysilyl groups per molecule. Also in this case, when an attempt is made to increase the amount of functional groups by using a diamine compound as the amine compound and using a polyepoxy compound as the epoxy compound, the product is gelled, and it may be difficult to use the product for the above applications.

The present invention has been made in view of the above circumstances, and an object of the present invention is to provide a silane compound that is obtained as a liquid without gelation, that has a greater effect of addition when used as a silane coupling agent, a surface treatment agent, a resin additive, a paint additive, an adhesive agent, or the like, and that generates a smaller amount of low-boiling alcohols when applied to the above applications, and a method for producing the same.

As a result of intensive studies to achieve the above object, the present inventors have found that a predetermined cyclic aminoorganoxysilane compound is obtained as a liquid without gelation, that the compound has a greater effect of addition when used as a silane coupling agent, a surface treatment agent, a resin additive, a paint additive, an adhesive agent, or the like, and that the compound generates a smaller amount of low-boiling alcohols when applied to the above applications, thereby completing the present invention.

That is, the present invention provides:
1. A cyclic aminoorganoxysilane compound of general formula (1): 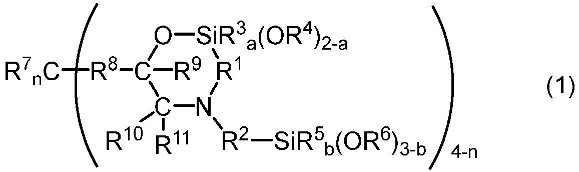 wherein R¹ and R² are each an unsubstituted divalent hydrocarbon group having 1 to 10 carbon atoms, R³ to R⁶ are each an unsubstituted monovalent hydrocarbon group having 1 to 20 carbon atoms, R⁷, R⁹, R¹⁰, and R¹¹ are each a hydrogen atom or an unsubstituted monovalent hydrocarbon group having 1 to 20 carbon atoms, R⁸ is an unsubstituted divalent hydrocarbon group having 1 to 10 carbon atoms and optionally interposed by an oxygen atom, and a, b, and n are each independently 0, 1, or 2; and
2. A method for producing the cyclic aminoorganoxysilane compound according to item 1, the method including reacting an aminoorganoxysilane compound of general formula (2): 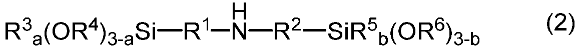 wherein R¹ to R⁶, a, and b have meanings same as described above, with an epoxy compound of general formula (3): 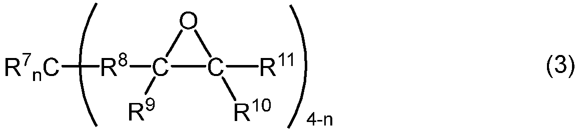 wherein R⁷ to R¹¹ and n have meanings same as described above.

### ADVANTAGEOUS EFFECTS

The cyclic aminoorganoxysilane compound of the present invention is obtained as a liquid without gelation and has a greater effect of addition than conventionally known compounds, and thus is useful as a silane coupling agent, a surface treatment agent, a resin additive, a paint additive, an adhesive agent, and the like. In addition, the cyclic aminoorganoxysilane compound has an advantage that the compound generates a smaller amount of low-boiling alcohols when applied to the above applications.

### BRIEF DESCRIPTION OF THE DRAWINGS

FIG. 1 is a ¹H-NMR spectrum of 1,4-bis[2,2-dimethoxy-6-(3-trimethoxysilylpropyl)-1-oxa-6-aza-2-silacyclooctane-8-ylmethoxy]butane obtained in Example 1;
FIG. 2 is an IR spectrum of 1,4-bis[2,2-dimethoxy-6-(3-trimethoxysilylpropyl)-1-oxa-6-aza-2-silacyclooctane-8-ylmethoxy]butane obtained in Example 1;
FIG. 3 is a ¹H-NMR spectrum of trimethylolpropane tris[2,2-dimethoxy-6-(3-trimethoxysilylpropyl)-1-oxa-6-aza-2-silacyclooctane-8-ylmethyl]ether obtained in Example 2; and
FIG. 4 is an IR spectrum of trimethylolpropane tris[2,2-dimethoxy-6-(3-trimethoxysilylpropyl)-1-oxa-6-aza-2-silacyclooctane-8-ylmethyl]ether obtained in Example 2.

### FURTHER EXPLANATIONS; OPTIONS AND PREFERENCES

The cyclic aminoorganoxysilane compound of the present invention is a compound of general formula (1) (hereinafter, the compound is referred to as "compound (1)").

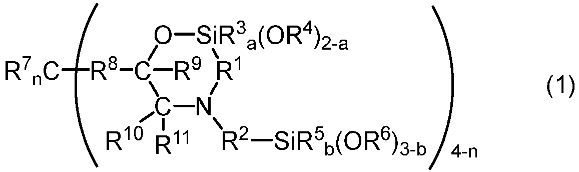

In general formula (1), R¹ and R² are each an unsubstituted divalent hydrocarbon group having 1 to 10 carbon atoms, preferably having 1 to 5 carbon atoms, and more preferably having 1 to 3 carbon atoms.

The divalent hydrocarbon group of R¹ may be linear or branched, and specific examples thereof include alkylene groups such as methylene, ethylene, trimethylene, propylene, 1-methyltrimethylene, isobutylene, tetramethylene, hexamethylene, octamethylene, and decamethylene groups, arylene groups such as phenylene and methylphenylene groups, and aralkylene groups such as ethylenephenylene and ethylenephenylenemethylene groups.

Among them, as R¹ and R², an unsubstituted linear alkylene group having 1 to 3 carbon atoms is preferable, and a methylene group, an ethylene group, and a trimethylene group are more preferable particularly from the viewpoint of easy availability of raw materials.

In general formula (1), R³ to R⁶ are each an unsubstituted monovalent hydrocarbon group having 1 to 20 carbon atoms, preferably having 1 to 10 carbon atoms, and more preferably having 1 to 6 carbon atoms.

The monovalent hydrocarbon group of R³ to R⁶ may be linear, branched, or cyclic, and specific examples thereof include linear alkyl groups such as methyl, ethyl, n-propyl, n-butyl, n-pentyl, n-hexyl, n-heptyl, n-octyl, n-nonyl, n-decyl, n-dodecyl, n-tetradecyl, n-hexadecyl, n-octadecyl, and n-icosyl groups, branched alkyl groups such as isopropyl, isobutyl, sec-butyl, tert-butyl, texyl, and 2-ethylhexyl groups, cyclic alkyl groups such as cyclopentyl and cyclohexyl groups, alkenyl groups such as vinyl, allyl, 1-propenyl, 1-butenyl, and 1-pentenyl groups, aryl groups such as phenyl, tolyl, and xylyl groups, and aralkyl groups such as benzyl and phenethyl groups.

Among them, an unsubstituted linear, branched, or cyclic alkyl group having 1 to 10 carbon atoms, an alkenyl group, an aryl group having 6 to 10 carbon atoms, and an aralkyl group are preferable, and a methyl group and a phenyl group are more preferable particularly from the viewpoint of easy availability of raw materials.

In general formula (1), R⁷, R⁹, R¹⁰, and R¹¹ are each a hydrogen atom or an unsubstituted monovalent hydrocarbon group having 1 to 20 carbon atoms, and specific examples of the unsubstituted monovalent hydrocarbon group having 1 to 20 carbon atoms include groups same as those mentioned as R³ to R⁶.

In general formula (1), R⁸ is an unsubstituted divalent hydrocarbon group having 1 to 10 carbon atoms and optionally interposed by an oxygen atom, and specific examples of the unsubstituted divalent hydrocarbon group that has 1 to 10 carbon atoms and is not interposed by an oxygen atom include groups same as those mentioned as R¹ and R².

Specific examples of the group that is interposed by an oxygen atom include an oxamethylene group, an oxaethylene group, a methyleneoxamethylene group, and an oxaphenylene group.

Specific examples of the compound (1) include reaction products of 1,7-dioctadiene epoxide and an aminoorganoxysilane compound, such as 1,7-bis[2,2-dimethoxy-4-(trimethoxysilylmethyl)-1-oxa-4-aza-2-silacyclohexane-6-yl]octane, 1,7-bis[2-methoxy-2-methyl-4-(dimethoxymethylsilylmethyl)-1-oxa-4-aza-2-silacyclohexane-6-yl]octane, 1,7-bis[2,2-dimethyl-4-(methoxydimethylsilylmethyl)-1-oxa-4-aza-2-silacyclohexane-6-yl]octane, 1,7-bis[2,2-diethoxy-4-(triethoxysilylmethyl)-1-oxa-4-aza-2-silacyclohexane-6-yl]octane, 1,7-bis[2-ethoxy-2-methyl-4-(diethoxymethylsilylmethyl)-1-oxa-4-aza-2-silacyclohexane-6-yl]octane, 1,7-bis[2,2-dimethyl-4-(ethoxydimethylsilylmethyl)-1-oxa-4-aza-2-silacyclohexane-6-yl]octane, 1,7-bis[2,2-dimethoxy-6-(3-trimethoxysilylpropyl)-1-oxa-6-aza-2-silacyclooctane-8-yl]octane, 1,7-bis[2-methoxy-2-methyl-6-(3-dimethoxymethylsilylpropyl)-1-oxa-6-aza-2-silacyclooctane-8-yl]octane, 1,7-bis[2,2-dimethyl-6-(3-methoxydimethylsilylpropyl)-1-oxa-6-aza-2-silacyclooctane-8-yl]octane, 1,7-bis[2,2-diethoxy-6-(3-triethoxysilylpropyl)-1-oxa-6-aza-2-silacyclooctane-8-yl]octane, 1,7-bis[2-ethoxy-2-methyl-6-(3-diethoxymethylsilylpropyl)-1-oxa-6-aza-2-silacyclooctane-8-yl]octane, and 1,7-bis[2,2-dimethyl-6-(3-ethoxydimethylsilylpropyl)-1-oxa-6-aza-2-silacyclooctane-8-yl]octane, reaction products of ethylene glycol diglycidyl ether and an aminoorganoxysilane compound, such as 1,2-bis[2,2-dimethoxy-4-(trimethoxysilylmethyl)-1-oxa-4-aza-2-silacyclohexane-6-ylmethoxy]ethane, 1,2-bis[2-methoxy-2-methyl-4-(dimethoxymethylsilylmethyl)-1-oxa-4-aza-2-silacyclohexane-6-ylmethoxy]ethane, 1,2-bis[2,2-dimethyl-4-(methoxydimethylsilylmethyl)-1-oxa-4-aza-2-silacyclohexane-6-ylmethoxy]ethane, 1,2-bis[2,2-diethoxy-4-(triethoxysilylmethyl)-1-oxa-4-aza-2-silacyclohexane-6-ylmethoxy]ethane, 1,2-bis[2-ethoxy-2-methyl-4-(diethoxymethylsilylmethyl)-1-oxa-4-aza-2-silacyclohexane-6-ylmethoxy]ethane, 1,2-bis[2,2-dimethyl-4-(ethoxydimethylsilylmethyl)-1-oxa-4-aza-2-silacyclohexane-6-ylmethoxy]ethane, 1,2-bis[2,2-dimethoxy-6-(3-trimethoxysilylpropyl)-1-oxa-6-aza-2-silacyclooctane-8-ylmethoxy]ethane, 1,2-bis[2-methoxy-2-methyl-6-(3-dimethoxymethylsilylpropyl)-1-oxa-6-aza-2-silacyclooctane-8-ylmethoxy]ethane, 1,2-bis[2,2-dimethyl-6-(3-methoxydimethylsilylpropyl)-1-oxa-6-aza-2-silacyclooctane-8-ylmethoxy]ethane, 1,2-bis[2,2-diethoxy-6-(3-triethoxysilylpropyl)-1-oxa-6-aza-2-silacyclooctane-8-ylmethoxy]ethane, 1,2-bis[2-ethoxy-2-methyl-6-(3-diethoxymethylsilylpropyl)-1-oxa-6-aza-2-silacyclooctane-8-ylmethoxy]ethane, and 1,2-bis[2,2-dimethyl-6-(3-ethoxydimethylsilylpropyl)-1-oxa-6-aza-2-silacyclooctane-8-ylmethoxy]ethane, reaction products of 1,4-butanediol diglycidyl ether and an aminoorganoxysilane compound, such as 1,4-bis[2,2-dimethoxy-4-(trimethoxysilylmethyl)-1-oxa-4-aza-2-silacyclohexane-6-ylmethoxy]butane, 1,4-bis[2-methoxy-2-methyl-4-(dimethoxymethylsilylmethyl)-1-oxa-4-aza-2-silacyclohexane-6-ylmethoxy]butane, 1,4-bis[2,2-dimethyl-4-(methoxydimethylsilylmethyl)-1-oxa-4-aza-2-silacyclohexane-6-ylmethoxy]butane, 1,4-bis[2,2-diethoxy-4-(triethoxysilylmethyl)-1-oxa-4-aza-2-silacyclohexane-6-ylmethoxy]butane, 1,4-bis[2-ethoxy-2-methyl-4-(diethoxymethylsilylmethyl)-1-oxa-4-aza-2-silacyclohexane-6-ylmethoxy]butane, 1,4-bis[2,2-dimethyl-4-(ethoxydimethylsilylmethyl)-1-oxa-4-aza-2-silacyclohexane-6-ylmethoxy]butane, 1,4-bis[2,2-dimethoxy-6-(3-trimethoxysilylpropyl)-1-oxa-6-aza-2-silacyclooctane-8-ylmethoxy]butane, 1,4-bis[2-methoxy-2-methyl-6-(3-dimethoxymethylsilylpropyl)-1-oxa-6-aza-2-silacyclooctane-8-ylmethoxy]butane, 1,4-bis[2,2-dimethyl-6-(3-methoxydimethylsilylpropyl)-1-oxa-6-aza-2-silacyclooctane-8-ylmethoxy]butane, 1,4-bis[2,2-diethoxy-6-(3-triethoxysilylpropyl)-1-oxa-6-aza-2-silacyclooctane-8-ylmethoxy]butane, 1,4-bis[2-ethoxy-2-methyl-6-(3-diethoxymethylsilylpropyl)-1-oxa-6-aza-2-silacyclooctane-8-ylmethoxy]butane, and 1,4-bis[2,2-dimethyl-6-(3-ethoxydimethylsilylpropyl)-1-oxa-6-aza-2-silacyclooctane-8-ylmethoxy]butane, reaction products of glycerol triglycidyl ether and an aminoorganoxysilane compound, such as glycerol tris[2,2-dimethoxy-4-(trimethoxysilylmethyl)-1-oxa-4-aza-2-silacyclohexane-6-ylmethyl]ether, glycerol tris[2-methoxy-2-methyl-4-(dimethoxymethylsilylmethyl)-1-oxa-4-aza-2-silacyclohexane-6-ylmethyl]ether, glycerol tris[2,2-dimethyl-4-(methoxydimethylsilylmethyl)-1-oxa-4-aza-2-silacyclohexane-6-ylmethyl]ether, glycerol tris[2,2-diethoxy-4-(triethoxysilylmethyl)-1-oxa-4-aza-2-silacyclohexane-6-ylmethyl]ether, glycerol tris[2-ethoxy-2-methyl-4-(diethoxymethylsilylmethyl)-1-oxa-4-aza-2-silacyclohexane-6-ylmethyl]ether, glycerol tris[2,2-dimethyl-4-(ethoxydimethylsilylmethyl)-1-oxa-4-aza-2-silacyclohexane-6-ylmethyl]ether, glycerol tris[2,2-dimethoxy-6-(3-trimethoxysilylpropyl)-1-oxa-6-aza-2-silacyclooctane-8-ylmethyl]ether, glycerol tris[2-methoxy-2-methyl-6-(3-dimethoxymethylsilylpropyl)-1-oxa-6-aza-2-silacyclooctane-8-ylmethyl]ether, glycerol tris[2,2-dimethyl-6-(3-methoxydimethylsilylpropyl)-1-oxa-6-aza-2-silacyclooctane-8-ylmethyl]ether, glycerol tris[2,2-diethoxy-6-(3-triethoxysilylpropyl)-1-oxa-6-aza-2-silacyclooctane-8-ylmethyl]ether, glycerol tris[2-ethoxy-2-methyl-6-(3-diethoxymethylsilylpropyl)-1-oxa-6-aza-2-silacyclooctane-8-ylmethyl]ether, and glycerol tris[2,2-dimethyl-6-(3-ethoxydimethylsilylpropyl)-1-oxa-6-aza-2-silacyclooctane-8-ylmethyl]ether, reaction products of trimethylolpropane triglycidyl ether and an aminoorganoxysilane compound, such as trimethylolpropane tris[2,2-dimethoxy-4-(trimethoxysilylmethyl)-1-oxa-4-aza-2-silacyclohexane-6-ylmethyl]ether, trimethylolpropane tris[2-methoxy-2-methyl-4-(dimethoxymethylsilylmethyl)-1-oxa-4-aza-2-silacyclohexane-6-ylmethyl]ether, trimethylolpropane tris[2,2-dimethyl-4-(methoxydimethylsilylmethyl)-1-oxa-4-aza-2-silacyclohexane-6-ylmethyl]ether, trimethylolpropane tris[2,2-diethoxy-4-(triethoxysilylmethyl)-1-oxa-4-aza-2-silacyclohexane-6-ylmethyl]ether, trimethylolpropane tris[2-ethoxy-2-methyl-4-(diethoxymethylsilylmethyl)-1-oxa-4-aza-2-silacyclohexane-6-ylmethyl]ether, trimethylolpropane tris[2,2-dimethyl-4-(ethoxydimethylsilylmethyl)-1-oxa-4-aza-2-silacyclohexane-6-ylmethyl]ether, trimethylolpropane tris[2,2-dimethoxy-6-(3-trimethoxysilylpropyl)-1-oxa-6-aza-2-silacyclooctane-8-ylmethyl]ether, trimethylolpropane tris[2-methoxy-2-methyl-6-(3-dimethoxymethylsilylpropyl)-1-oxa-6-aza-2-silacyclooctane-8-ylmethyl]ether, trimethylolpropane tris[2,2-dimethyl-6-(3-methoxydimethylsilylpropyl)-1-oxa-6-aza-2-silacyclooctane-8-ylmethyl]ether, trimethylolpropane tris[2,2-diethoxy-6-(3-triethoxysilylpropyl)-1-oxa-6-aza-2-silacyclooctane-8-ylmethyl]ether, trimethylolpropane tris[2-ethoxy-2-methyl-6-(3-diexthoxymethylsilylpropyl)-1-oxa-6-aza-2-silacyclooctane-8-ylmethyl]ether, and trimethylolpropane tris[2,2-dimethyl-6-(3-ethoxydimethylsilylpropyl)-1-oxa-6-aza-2-silacyclooctane-8-ylmethyl]ether, and reaction products of pentaerythritol tetraglycidyl ether and an aminoorganoxysilane compound, such as pentaerythritol tetrakis[2,2-dimethoxy-4-(trimethoxysilylmethyl)-1-oxa-4-aza-2-silacyclohexane-6-ylmethyl]ether, pentaerythritol tetrakis[2-methoxy-2-methyl-4-(dimethoxymethylsilylmethyl)-1-oxa-4-aza-2-silacyclohexane-6-ylmethyl]ether, pentaerythritol tetrakis[2,2-dimethyl-4-(methoxydimethylsilylmethyl)-1-oxa-4-aza-2-silacyclohexane-6-ylmethyl]ether, pentaerythritol tetrakis[2,2-diethoxy-4-(triethoxysilylmethyl)-1-oxa-4-aza-2-silacyclohexane-6-ylmethyl]ether, pentaerythritol tetrakis[2-ethoxy-2-methyl-4-(diethoxymethylsilylmethyl)-1-oxa-4-aza-2-silacyclohexane-6-ylmethyl]ether, pentaerythritol tetrakis[2,2-dimethyl-4-(ethoxydimethylsilylmethyl)-1-oxa-4-aza-2-silacyclohexane-6-ylmethyl]ether, pentaerythritol tetrakis[2,2-dimethoxy-6-(3-trimethoxysilylpropyl)-1-oxa-6-aza-2-silacyclooctane-8-ylmethyl]ether, pentaerythritol tetrakis[2-methoxy-2-methyl-6-(3-dimethoxymethylsilylpropyl)-1-oxa-6-aza-2-silacyclooctane-8-ylmethyl]ether, pentaerythritol tetrakis[2,2-dimethyl-6-(3-methoxydimethylsilylpropyl)-1-oxa-6-aza-2-silacyclooctane-8-ylmethyl]ether, pentaerythritol tetrakis[2,2-diethoxy-6-(3-triethoxysilylpropyl)-1-oxa-6-aza-2-silacyclooctane-8-ylmethyl]ether, pentaerythritol tetrakis[2-ethoxy-2-methyl-6-(3-diethoxymethylsilylpropyl)-1-oxa-6-aza-2-silacyclooctane-8-ylmethyl]ether, and pentaerythritol tetrakis[2,2-dimethyl-6-(3-ethoxydimethylsilylpropyl)-1-oxa-6-aza-2-silacyclooctane-8-ylmethyl]ether.

Next, a method for producing the compound (1) of the present invention is described.

The compound (1) can be produced, for example, by reacting an aminoorganoxysilane compound of general formula (2) (hereinafter, the compound is referred to as "compound (2)") with an epoxy compound of general formula (3) (hereinafter, the compound is referred to as "compound (3)").

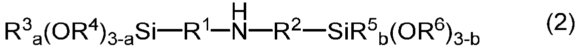

In the formula, R¹ to R⁶, a, and b have meanings same as described above.

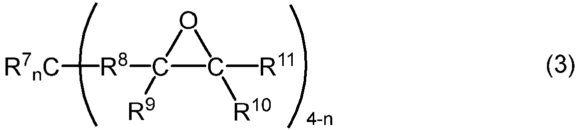

In the formula, R⁷ to R¹¹ and n have meanings same as described above.

Specific examples of the compound (2) include bis(alkoxysilylmethyl) amines such as bis(trimethoxysilylmethyl) amine, bis(dimethoxymethylsilylmethyl) amine, bis(methoxydimethylsilylmethyl) amine, bis(triethoxysilylmethyl) amine, bis(diethoxymethylsilylmethyl) amine, and bis(ethoxydimethylsilylmethyl) amine, and bis(alkoxysilylpropyl) amines such as bis(3-trimethoxysilylpropyl) amine, bis(3-dimethoxymethylsilylpropyl) amine, bis(3-methoxydimethylsilylpropyl) amine, bis(3-triethoxysilylpropyl) amine, bis(3-diethoxymethylsilylpropyl) amine, and bis(3-ethoxydimethylsilylpropyl) amine.

The compound (2) may be commercially available or produced. When the compound (2) is produced, the compound (2) can be obtained according to a conventionally known method, such as a method of reacting an aminoalkyl organoxysilane compound with a haloalkyl organoxysilane compound.

Specific examples of the compound (3) include 1,7-dioctadiene epoxide, ethylene glycol diglycidyl ether, 1,4-butanediol diglycidyl ether, glycerol triglycidyl ether, trimethylolpropane triglycidyl ether, and pentaerythritol tetraglycidyl ether.

The compounding ratio between the compound (2) and the compound (3) is not particularly limited, but the compounding ratio of the compound (2) is preferably 0.2 to 3.0 mol, and more preferably 0.5 to 2 mol per 1 mol of the epoxy group of the compound (3) from the viewpoint of reactivity and productivity.

The reaction temperature of the above reaction is not particularly limited, but is preferably -40 to 200°C, and more preferably 0 to 150°C, and the reaction time is not particularly limited, but is preferably 1 to 40 hours, and more preferably 1 to 20 hours. The reaction atmosphere is preferably an inert gas atmosphere such as nitrogen or argon.

Although the above reaction proceeds without a catalyst, a basic catalyst or an acid catalyst can be used for the purpose of improving the reaction rate.

Specific examples of the basic catalyst include sodium hydroxide, potassium hydroxide, sodium methoxide, sodium ethoxide, a methanol solution of sodium methoxide, and an ethanol solution of sodium ethoxide.

Specific examples of the acid catalyst include inorganic acids such as sulfuric acid, hydrochloric acid, and nitric acid, sulfonic acid compounds such as methanesulfonic acid, benzenesulfonic acid, toluenesulfonic acid, dodecylbenzenesulfonic acid, and trifluoromethanesulfonic acid, and salts thereof.

The amount of the catalyst used is not particularly limited, but is preferably 0.0001 to 0.2 mol, and more preferably 0.001 to 0.1 mol per 1 mol of the epoxy group of the compound (3) from the viewpoint of reactivity and productivity.

Although the above reaction proceeds without a solvent, a solvent can be used.

Specific examples of the solvent include hydrocarbon solvents such as pentane, hexane, cyclohexane, heptane, isooctane, benzene, toluene, and xylene, ether solvents such as diethyl ether, tetrahydrofuran, and dioxane, ester solvents such as ethyl acetate and butyl acetate, aprotic polar solvents such as acetonitrile, N,N-dimethylformamide, and N-methylpyrrolidone, chlorinated hydrocarbon solvents such as dichloromethane and chloroform, and alcohol solvents such as methanol, ethanol, 1-propanol, and 2-propanol. These solvents may be used singly or as a mixture of two or more thereof.

From the reaction liquid obtained as described above, the target product can be recovered by a usual method such as distillation or removal of a low-boiling compound by evaporation.

In addition, the obtained target product may be stored and used after being diluted with the above solvent for the purpose of preventing gelation.

### EXAMPLES

Hereinafter, the present invention is specifically described with reference to Examples, but the present invention is not limited to the following Examples.

### Example 1

A flask equipped with a stirrer, a reflux condenser, a dropping funnel, and a thermometer was charged with 136.6 g (0.4 mol) of bis(3-trimethoxysilylpropyl) amine and 28 g of methanol, 42.5 g (0.21 mol) of 1,4-butanediol diglycidyl ether was added dropwise at 70 to 80°C over 1 hour, and the contents were stirred at that temperature for 10 hours. The reaction liquid was concentrated, and then thin-film distillation was performed at a wall temperature of 290°C and a pressure of 25 kPa to give 98.5 g of a distillate.

The mass spectrum, ¹H-NMR spectrum, and IR spectrum of the obtained distillate were measured. From the results of the measurements, it was confirmed that the obtained compound was 1,4-bis[2,2-dimethoxy-6-(3-trimethoxysilylpropyl)-1-oxa-6-aza-2-silacyclooctane-8-ylmethoxy]butane.

### [Mass spectrum]

m/z 789, 639, 366, 290, 121, 84

### [¹H-NMR spectrum (deuterated chloroform solvent)]

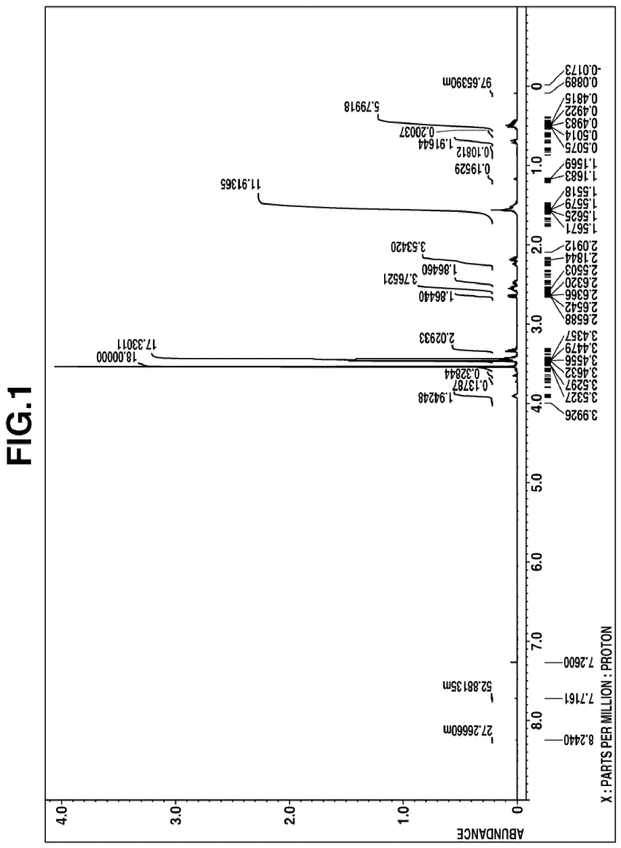

The ¹H-NMR spectrum chart is shown in FIG. 1.

### [IR spectrum]

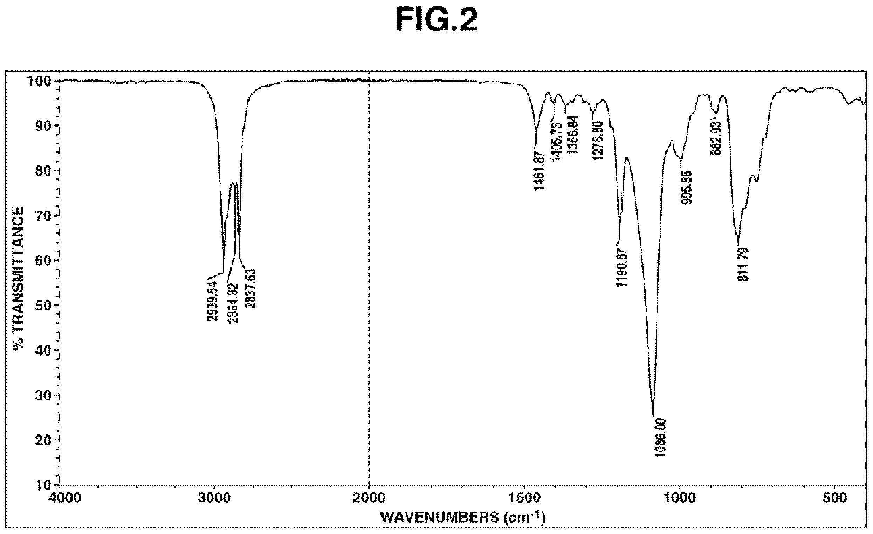

The IR spectrum chart is shown in FIG. 2.

### Example 2

A flask equipped with a stirrer, a reflux condenser, a dropping funnel, and a thermometer was charged with 204.9 g (0.6 mol) of bis(3-trimethoxysilylpropyl) amine and 42 g of methanol, 90.7 g (0.21 mol) of trimethylolpropane triglycidyl ether was added dropwise at 70 to 80°C over 1 hour, and the contents were stirred at that temperature for 8 hours. The reaction liquid was concentrated to give 276.9 g of a concentrated liquid. To the obtained concentrated liquid, 180 g of toluene was added to give a toluene solution.

The ¹H-NMR spectrum and IR spectrum of the obtained toluene solution were measured. From the results of the measurements, it was confirmed that the obtained compound was trimethylolpropane tris[2,2-dimethoxy-6-(3-trimethoxysilylpropyl)-1-oxa-6-aza-2-silacyclooctane-8-ylmethyl]ether.

### [¹H-NMR spectrum (deuterated chloroform solvent)]

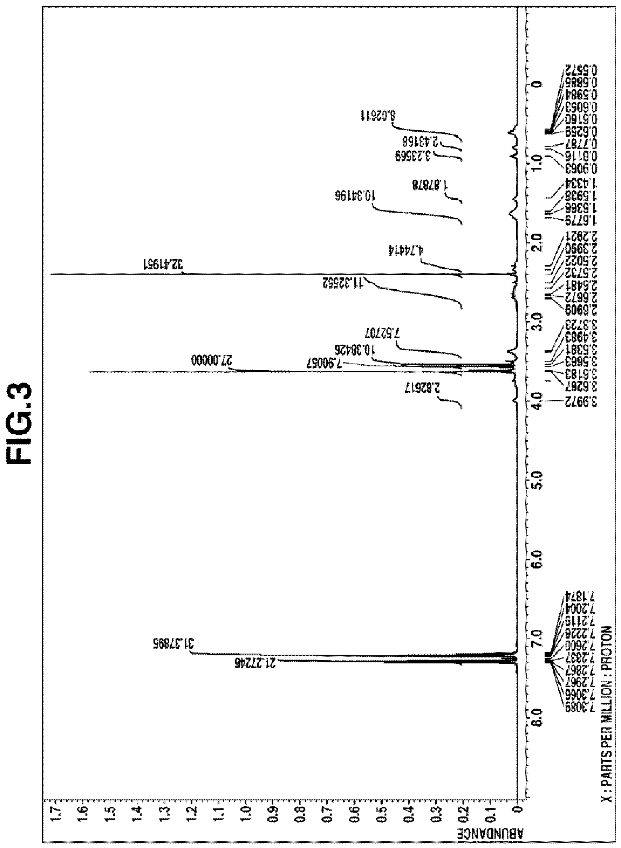

The ¹H-NMR spectrum chart is shown in FIG. 3.

### [IR spectrum]

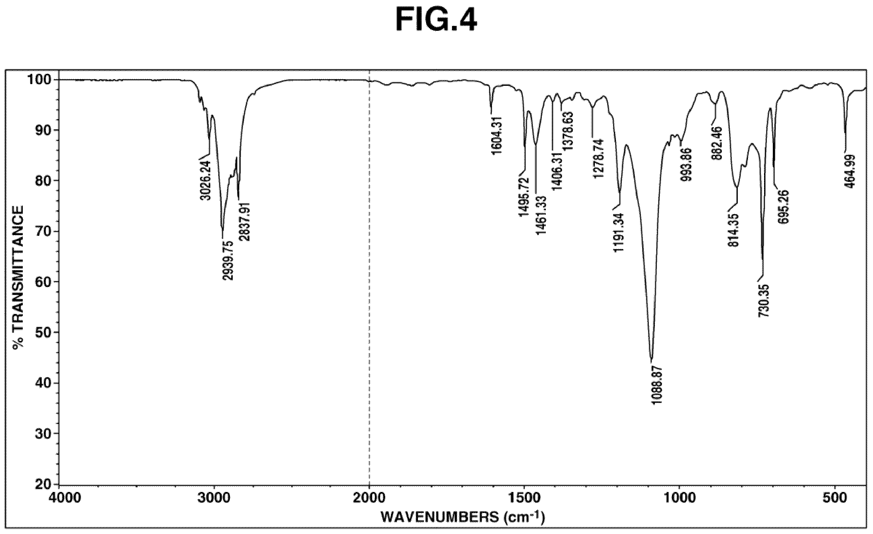

The IR spectrum chart is shown in FIG. 4.

## Claims

1. A cyclic aminoorganoxysilane compound of general formula (1): 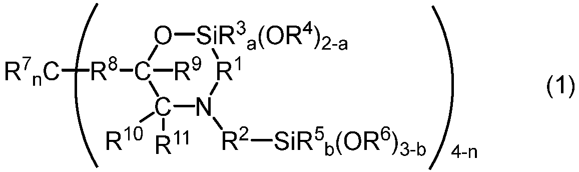 wherein R¹ and R² are each an unsubstituted divalent hydrocarbon group having 1 to 10 carbon atoms, R³ to R⁶ are each an unsubstituted monovalent hydrocarbon group having 1 to 20 carbon atoms, R⁷, R⁹, R¹⁰, and R¹¹ are each a hydrogen atom or an unsubstituted monovalent hydrocarbon group having 1 to 20 carbon atoms, R⁸ is an unsubstituted divalent hydrocarbon group having 1 to 10 carbon atoms and optionally interposed by an oxygen atom, and a, b, and n are each independently 0, 1, or 2.

2. A method for producing the cyclic aminoorganoxysilane compound according to claim 1, the method comprising reacting an aminoorganoxysilane compound of general formula (2): 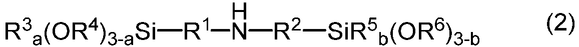 wherein R¹ to R⁶, a, and b have meanings same as described above, with an epoxy compound of general formula (3): 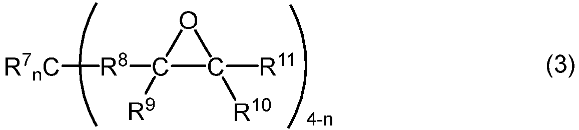 wherein R⁷ to R¹¹ and n have meanings same as described above.
